# EUROPEAN PATENT SPECIFICATION

(11) **EP 1 313 378 B1**
(45) Date of publication and mention of the grant of the patent: **17.01.2007**
(21) Application number: 01971930.1
(22) Date of filing: 20.08.2001
(51) Int. Cl.: A23L 1/30, A23L 1/305, A23L 1/302

(54) **NUTRITIONAL COMPOSITION AND METHOD FOR IMPROVING PROTEIN DEPOSITION**
ERNÄHRUNGSZUSAMMENSETZUNG UND VERFAHREN ZUR VERBESSERUNG DER ABSETZUNG VON PROTEINEN
COMPOSITION ET PROCEDE NUTRITIONNELS PERMETTANT D'AMELIORER LE DEPOT PROTEIQUE

(30) Priority: 22.08.2000 US 227117 P
(43) Date of publication of application: 28.05.2003
(73) Proprietor: Société des Produits Nestlé S.A., 1800 Vevey (CH); INSTITUT NATIONAL DE LA RECHERCHE AGRONOMIQUE, 75338 Paris (FR)
(72) Inventor: FUCHS, Eileen, C., Gaylordville, CT 06776 (US); GARCIA-RODENAS, Clara, L., CH-1616 Forel (CH); GUIGOZ, Yves, CH-1066 Epalinges (CH); LEATHWOOD, Peter, CH-1807 Blonay (CH); REIFFERS-MAGNANI, Kristel, NL-3012 GD Rotterdam (NL); MALLANGI, Chandrasekhara, R., New Milford, CT 06776 (US); TURINI, Marco, CH-1066 Epalinges (CH); ANANTHARAMAN, Helen, Gillian, Bridgewater, CT 06752 (US); BEAUFRERE, Bernard, F-63400 Chamalieres (FR); DANGIN, Martial, F-63200 RIOM (FR); BALLEVRE, Olivier, CH-1000 Lausanne 25 (CH)
(74) Representative: Thomas, Alain
(86) International application number: PCT/EP2001/009579
(87) International publication number: WO 2002/015720

(56) References cited:
- EP-A- 0 486 425
- EP-A- 0 898 900
- EP-A- 0 904 784
- WO-A-97/16079
- WO-A-99/42001
- DE-A- 19 830 528
- US-A- 5 641 531

## Description

### BACKGROUND OF THE INVENTION

The present invention relates to the use of a composition in the manufacture of a functional food or medicament for for improving muscle protein synthesis, preventing muscle loss, and accelerating muscle mass recovery in patients recovering from illness or surgery, those with limited appetite such as the elderly, or anorexic patients, or those who have impaired ability to digest other sources of protein which comprises administering an effective amount of the composition.

Many people do not take in sufficient nutrients for a nutritionally complete diet. In order to assist these people, nutritional supplements have been developed. Nutritional supplements are usually not intended to provide all the nutrients necessary for a nutritionally complete diet; instead they are generally intended to supplement the diet such that it becomes more nutritionally complete. However, in some instances they may provide complete nutrition.

There are many targets for nutritional supplements; for example sick patients, convalescing patients, anorexic patients and the elderly. For sick and convalescing patients, the spontaneous intake of food is often lower than normal and insufficient to meet nutritional needs. Recovery and restoration of strength may therefore be impaired. A significant proportion of the elderly, on the other hand, tend to eat too little to meet all of their nutritional needs. This is usually due to reduced energy needs following reduction in body weight and diminished physical activity. Anorexic patients by definition suffer a loss of appetite and do not take in sufficient nutrients. In all cases, supplementation to provide missing nutrients can offer advantages.

Various nutritional supplements are available. A family of supplements commonly found in North America is sold under the name ENSURE by Ross Laboratories. The protein source used is predominantly caseinates and soy protein isolates. Another family which is commercially available is sold under the name RESOURCE by Novartis Nutrition Ltd. In this case, the protein source is based on caseinates. Another family which is commercially available is sold under the name NUBASICS by Nestlé Clinical Nutrition. In general, the protein source used in products of this family is caseinate. However, it is found that these products suffer from the problem that they do not necessarily result in a consumer receiving sufficient nutrients; either because an insufficient amount of the product is consumed or insufficient other foods are consumed. This is especially the case with convalescing patients, the elderly and other anorexic patients where loss of appetite leads to insufficient nutrients being consumed.

Nutritional supplements which are based on other protein sources, such as whey protein, are also available or have been described in the literature. In general, the nutritional supplements based upon whey protein are provided in the form of fruit juices; for example as described in European patent application 0486425 and US patent 5,641,531. However, these products suffer from the problem that they generally do not provide a lipid source despite the fact that lipids are essential for adequate nutrition.

WO 99/42001 discloses calorically dense nutritional compositions in which the protein source provides 15 to 20 % of the total energy and which may be used for maintaining body mass in metabolically stressed patients. WO 97/16079 discloses enteral compositions for paediatric patients in which the protein source provides 10-16% of the total energy and which may be used for patients requiring moderate tissue repair.

Therefore, a need exists for a composition that is capable of providing for the special nutritional requirements of those requiring increased muscle protein synthesis or muscle mass recovery.

### SUMMARY OF THE INVENTION

Remarkably, a composition has now been found that addresses the problems set out above and enables such persons to retain or regain their strength.

In a first aspect the invention provides the use of a composition which comprises: (i) a protein source which provides at least 8% and preferably at least 10% total calories of the composition and which includes at least 50% by weight of whey protein; (ii) a lipid source having an omega 6:3 fatty acid ratio of 5:1 to 10:1 and which provides at least 18% of the total calories of the composition; (iii) a carbohydrate source which provides the remaining calories of the composition; and (iv) a balanced macronutrient profile comprising at least vitamin E and vitamin C for the preparation of an ingestible carrier for improving muscle synthesis.

Within the context of this specification the word "comprises" is taken to mean "includes, among other things". It is not intended to be construed as "consists of only".

In a second aspect of the invention the composition is used for preventing muscle loss in an individual at risk of same.

In a third aspect of the invention, the composition is used for accelerating muscle mass recovery in an individual.

Surprisingly it has now been found that a composition for a nutritional supplement in accordance with the invention, because it contains whey protein, can produce at least a 2-fold increase in whole body protein deposition in elderly people as compared to casein as the protein source. Therefore it may help such patients conserve muscle protein, rebuild muscle protein more rapidly, and hence get their strength back faster.

In addition, it has now been found that a composition for a nutritional supplement used in accordance with the invention, because it contains whey protein, is easier to digest. Therefore the problem of a patient not consuming a sufficient amount of the supplement may be reduced. Similarly, the problem of a patient not consuming sufficient other foods may be reduced. Further, the composition has a well balanced lipid profile which provides a readily available energy source.

Preferably an embodiment of the composition includes whey protein as the primary source of protein (amino acids). The whey protein can be sweet whey or acid whey or a combination thereof. Preferably it is in the form of a whey protein partial hydrolysate produced by enzymatic treatment, preferably with trypsin, Alcalase or Novozyme, of whey protein and therefore is less viscous, lighter and provides the advantage that it is more easily digested than known compositions for fortified beverages and nutritional supplements.

It should be appreciated that the composition used according to the invention is not limited to a whey protein hydrolysate. For example, a non-hydrolyzed whey protein can be used, preferably when the composition is made in a powder form.

The partial hydrolysis of whey protein with one or more of the above enzymes could be carried out at a pH ranging from about 6.6 to 8.8 (preferably about 8.5) and a temperature of about 40 to about 70 C (preferably about 65 C) at an enzyme concentration of about 0.5 to about 2.5 (preferably about 1.0) percent of the protein. Preferably, enzyme treatment is carried out for about 5 to about 120 minutes (preferably 15 minutes) to achieve adequate hydrolysis.

Preferably the whey protein hydrolysate represents a minimum of 50% of the protein content in the formulation. It is preferably the sole protein source but may be combined with intact whey protein or other protein or peptide sources including peptides naturally found in whey or milk such as caseino glycomacropeptide (CGMP). Surprisingly, it has been found that, despite the high proportion of partially hydrolyzed protein, in the composition it is physically stable and has a very acceptable taste due to the process used to prepare the hydrolysate and the selection of a flavoring system to give an acceptable organoleptic profile.

Preferably, at least 50% by weight of the whey protein is hydrolyzed. Most preferably, at least 70% by weight of the whey protein is hydrolyzed.

Preferably the protein source provides 8% to 20%, more preferably an embodiment for adults comprises a protein source which provides 15% to 18% (most preferably about 16%) of total energy of the composition. Preferably an alternative embodiment is suitable for children and it comprises a protein source which provides 8% to 14% (most preferably about 12%) of total energy of the composition.

Remarkably, because of the nature of the whey protein and the facts that it increases protein synthesis and it is capable of being easily digested, the composition has a beneficial effect in persons requiring a nutritional supplement such as those suffering from muscle mass depletion and/or with limited appetite, such as those suffering or recovering from trauma, illness, or surgery, the elderly or those who have problems digesting other sources of protein such as persons having chronic gastritis who are known to have a reduced gastric pepsin digestion. Remarkably, the composition enables such persons to retain or regain their strength quickly and therefore helps aid recovery of a convalescing patient.

Preferably the lipid source comprises 40% to 65% by weight of monounsaturated fatty acids; and 15% to 30% by weight of polyunsaturated fatty acids. The saturated fatty acid content is preferably less than 30% by weight Up to 20% by weight of medium chain triglycerides may be incorporated into the fat blend to facilitate digestion. The lipid source may contain at least about 30 mg of vitamin E per 100 g of lipid source. ,

Preferably the lipid source provides 25% to 35% of total energy of the composition, more preferably about 30% of total energy of the composition.

Preferably the carbohydrate source comprises sucrose, com syrup, maltodextrin or a combination thereof. Preferably the carbohydrate source provides 50% to 60% of total energy of the composition.

Preferably, an embodiment of the composition has a micronutrient composition having a unique profile rich in nutrients including one or more selected from the group which comprises Vitamin E, Vitamin C, taurine, folic acid and vitamin B-12. Remarkably, the profile aids replenishment of nutrients required in higher quantities during periods of illness or recovery due to oxidative stress or inflammatory conditions and nutrients such as vitamin B-12 that may be poorly absorbed in those suffering from digestive disorders such as chronic gastritis or those who have undergone major intestinal surgery,

Preferably the micronutrients include at least folic acid and/or Vitamin B-12.

Preferably an embodiment of the composition comprises prebiotic fiber. Preferably the fiber is selected from the group which comprises inulin, acacia gum, resistant starch, dextran, xylo-oligosaeoharida (XOS), fructooligosaccharide (FOS), galactooligosaccharide, or a combination thereof.

Preferably an embodiment of the composition is in a powdered form for dilution with water before use or a ready to use fortified beverage in liquid form; or in the form of a pudding with a custard- or flan- like texture suitable for consumption by those with dysphagia or other swallowing problems; or in the form of a bar to provide an interesting selection of different varieties.

Preferably, an embodiment of the composition is formulated for human consumption and/or administration. Preferably, an alternative embodiment is formulated for consumption by a companion animal.

Preferably, an embodiment of the composition used according to the present invention comprises the addition of at least one probiotic micro-organism. The probiotic micro-organism provides the advantage of restoring the natural balance of the intestinal flora following antibiotic therapy.

More preferably an embodiment of the composition in powdered form contains a lactic acid bacterium and/or its fermentation metabolites. Preferably the lactic acid bacterium is selected from the group which consists of L. johnsonii, Lb. Paracasei or a combination thereof. This product has the advantage of inhibiting the growth of H.pylori in the stomach which is associated with the development of ulcer particularly in individuals having gastritis. Most preferably the probiotic bacteria comprises a Lb. Paracasei strain deposited under the number NCC 2461.

An advantage is that it provides a composition that can be provided in a functional food product and which therefore does not require special administration.

Another advantage is that, in the form of a pudding with a thin custard or flan like texture, the product can be consumed by those suffering from dysphagia.

Another advantage is that a preferred embodiment is rich in Vitamin E and Vitamin C and as such can be used to replete levels of these nutrients in the blood following depletion related to infection, sepsis or other oxidative stress. Preferably, an embodiment additionally comprises taurine and as such can be used to replete levels of taurine in the blood following depletion related to infection, sepsis or other oxidative stress.

Another advantage is that a preferred embodiment is particularly rich in Vitamin B-12 and folic acid which may be poorly absorbed in patients with gastric disease or following surgery to the intestinal tract.

Additional features and advantages of the present invention are described in, and will be apparent from, the description of the presently preferred embodiments which are set out below.

### BRIEF DESCRIPTION OF THE FIGURES

Figure 1 illustrates graphically, protein synthesis after consumption of nutritional supplements containing whey protein or casein.
Figure 2 illustrates graphically, protein balance after consumption of nutritional supplements containing casein or whey protein.

### DETAILED DESCRIPTION OF THE INVENTION

This invention provides nutritional supplements which are used for providing supplemental nutrition to an individual requiring, or that could benefit from, increased muscle protein synthesis. Such an individual may include the elderly. Due to its components the supplement is more rapidly digested and therefore the patient is more likely to consume a therapeutically effective amount of the supplement or other food to provide for adequate nutrition.

The protein source includes at least about 50% by weight of whey protein that preferably has been at least partially hydrolyzed. The whey protein used to produce the hydrolysate may be a commercially available whey protein source; either based upon sweet whey or acid whey or a combination thereof. Preferably the whey protein is a whey protein source containing more than 80% by weight of whey protein. A suitable whey protein concentrate is LACPRODAN 9087 and suitable whey protein isolate sources include ALACEN 895 (New Zealand Milk Products Inc), BiPRO (Le Sueur Isolates of Le Sueur, Minnesota), PROVON-190 (Avonmore Ingredients Inc of Monroe Wisconsin) and LACPRODAN 9212 (Royal Proteins, Inc of Rosemont Illinois).

The protein source may, if desired, include amounts of other suitable types of protein. For example, the protein source may further include minor amounts of casein protein, soy protein, rice protein, pea protein, carob protein, oat protein, milk protein, caseino-glyco-macropeptide or mixtures of these proteins. Further, if desired, the protein source may further include minor amounts of free amino acids. The other suitable types of protein preferably comprise less than 50% by weight of the protein source; more preferably less than about 30% by weight,

The protein source preferably provides 8% to 20% of the energy of the nutritional supplement. For example, the protein source may provide 15% to 18% of the energy of the nutritional supplement in an embodiment suitable for an adult or 8% to 14% of the energy of the supplement in an embodiment suitable for pediatric use.

The nutritional composition includes a lipid source. Preferably the lipid source provides 18% to 40% of the energy of the nutritional supplement; more preferably 25% to 35% of the energy of the nutritional supplement. For example, the lipid source may provide about 30% of the energy of the nutritional supplement

The lipid source may include medium chain triglycerides (MCT) up to a level of 20% of the total lipid by weight. The lipid source is rich in monounsaturated fatty acids. In particularly, the lipid source contains at least 40% by weight of monounsaturated fatty acids. Preferably, the lipid source contains 45% to 65% by weight of monounsaturated fatty acids; for example about 55% by weight

The lipid source may also contain polyunsaturated fatty acids. Preferably the lipid source contains 15% to 30% by weight of polyunsaturated fatty acids; for example about 20% by weight of polyunsaturated fatty acids. Preferably, the n-6 to n-3 fatty acid ratio is 5:1 to 9:1; for example about 7:1.

The lipid source has a saturated fatty acid content of less than 35% by weight; including medium chain triglycerides. More preferably, the lipid source contains less than 30% by weight of saturated fatty acids.

Suitable lipid sources include high oleic sunflower oil, high oleic safflower oil, sunflower oil, safflower, rapeseed oil, soy oil, olive oil, canola oil, com oil, peanut oil, rice bran oil, butter fat, hazelnut oil and structured lipids. Fractionated coconut oils are a suitable source of medium chain triglycerides.

The nutritional supplement also includes a carbohydrate source. The carbohydrate source preferably provides 40% to 65% of the energy of the nutritional supplement; especially 50% to 60% of the energy of the nutritional supplement For example, the carbohydrate source may provide about 54% of the energy of the supplement Several carbohydrates may be used including maltodextrin, corn syrup, com starch, modified starch, or sucrose, or fructose, or mixtures thereof. If desired, the supplement may be free from lactose.

The nutritional supplement preferably includes a complete vitamin and mineral profile, For example, sufficient vitamins and minerals may be provided to supply 50% to 500% of the recommended daily allowance of the vitamins and minerals per 1000 calories of the nutritional supplement. The nutritional supplement preferably is rich in vitamin E. For example, the nutritional supplement may contain between 80 International Units and 120 International Units of Vitamin E per 1000 kcal. More preferably, the nutritional supplement contains about 30 International Units of Vitamin E per 250 ml serving of the supplement. Furthermore the nutritional supplement is also rich in Vitamin C providing between 150 and 250 mg per 1000 kcal or preferably about 60 mg per serving. The supplement also preferably contains 200 g of folic acid and 3 g of Vitamin B-12 per serving. Alternative embodiments of the supplement for pediatric use have a modified vitamin and mineral profile specifically tailored to the special needs of this age group.

The nutritional supplement further includes a source of a soluble, prebiotic fiber. A prebiotic fiber is a fiber which beneficially affects the host by selectively stimulating growth and/or activity of bacteria in the colon which have the potential to improve host health. Suitable soluble, prebiotic fibers include fructooligosaccharides (FOS) and inulin. Suitable inulin extracts may be obtained from Orafti SA of Tirlemont 3300, Belgium under the trade mark "Raftiline". Similarly, suitable fructooligosaccharides may be obtained from Orafti SA of Tirlemont 3300, Belgium under the trade mark "Raftilose". Preferably, both FOS and inulin are provided in a ratio of 60: 40 to 80: 20, most preferably about 70:30 Other possible fibers include gums such as guar gum, xanthan gum, xylo-oligosaccharides, gum arabic, pectin, acacia gum, resistant starch, dextrans or mixtures of these. The fiber selected should not induce satiety.

The soluble, prebiotic fibers are reported to promote the growth of bifidobacteria in the gastro-intestinal tract and, in certain circumstances prevent or decrease the growth of pathogens such as Clostridiae. Further, promoting the growth of bifidobacteria is reported to have various other beneficial effects. Also, during fermentation of the fibers in the colon, short chain fatty acids are produced. These fatty acids are a fuel for intestinal cells.

The soluble, prebiotic fibers are preferably present in an amount sufficient to provide 4 to 9 g of soluble, fermentable fiber to the patient per day. Therefore the prebiotic fibers may be present in an amount of 6 g to 12 g per 1000 kcal. Alternative embodiments comprise blends of prebiotic fibers in an amount of 9 g or less, for example 4g of blend.

If desired, the nutritional supplement may also contain a source of insoluble dietary fiber. Suitable sources of insoluble dietary fibers are hull fibers from legumes and grains; for example pea hull fiber, oat hull fiber, barley hull fiber, and soy hull fiber.

The nutritional supplement preferably has an energy content of 800 kcal/l to 2000 kcal/l; for example an energy content of about 1000 kcal/l or about 1500 kcal/l.

The nutritional supplement may be in the form of a soluble powder, a liquid concentrate, a pudding, a bar/snack or a ready-to-use formulation suitable for oral consumption or enteral administration. Ready to drink formulations are particularly preferred. Various flavors, sweeteners, and other additives may also be present Artificial sweeteners such as acetosulfame and L-aspartyl based sweeteners may be used; for example acesulfame-K or aspartame or a mixture thereof.

The nutritional supplement may be produced, for example, by blending together the protein source, suspended in water, preferably water which has been subjected to reverse osmosis, and the lipid source. Commercially available liquifiers may be used to form the liquid mixture If used, emulsifiers may be included in the blend. The vitamins and minerals may be added at this point but are usually added later to avoid thermal degradation. Any added lipophilic vitamins, emulsifiers and the like may be dissolved into the lipid source prior to blending. The liquid mixture is then homogenized; for example in two stages at about 7 MPa to about 40 MPa in the first stage and about 2 MPa to about 14 MPa in the second stage Protein hydrolysis is carried out as described earlier. Alternately, the whey protein may be reconstituted in water and hydrolyzed prior to the formation of an emulsion: This is the preferred procedure if a blend of hydrolyzed whey protein and other intact proteins are desired. If this is the practice adopted, then intact protein and lipid are added to the hydrolyzed whey protein following the hydrolysis procedure and the mixture is then homogenized. Termination of hydrolysis is achieved by denaturing the enzyme preferably by heat or by adjusting the pH or a combination thereof. Inactivation of the enzyme activity is accomplished by using conditions designed to minimize the detrimental effects of heat on the protein stability and product taste and quality. For example, enzyme inactivation may be achieved by heating to a temperature in the range of about 90°C for 5 minutes to about 110°C for about 15 seconds. This may be carried out by steam injection or by heat exchanger; for example a plate heat exchanger.

The liquid mixture may then be cooled gradually to about 20°C to about 30°C; for example by flash cooling and heat exchanger, preferably a plate heat exchanger. The carbohydrate source may be added at this point or later either in a dry form or as a liquid slurry. The mixture may then be further cooled to add any heat sensitive components; such as vitamins and minerals. Water, preferably water which has been subjected to reverse osmosis, may then be mixed in to form a liquid mixture. The pH and solids content of the homogenized mixture is conveniently standardized at this point.

The liquid mixture may then be thermally treated for example using an aseptic process to reduce bacterial loads and sterilize the product. For example, the liquid mixture may be rapidly heated to a temperature in the range of about 110°C for 5 minutes to about 150°C for about 5 seconds. This may be carried out by steam injection or by heat exchanger; for example a plate heat exchanger. The liquid mixture is then homogenized; for example in two stages at about 7 MPa to about 40 MPa in a first stage and about 2 MPa to about 14 MPa in a second stage.

If it is desired to produce a liquid nutritional supplement, the homogenized mixture is filled into suitable containers, such as cans. The filling may either be aseptic or the containers may be retorted. Suitable apparatus for carrying out filling is commercially available.

We have surprisingly observed that whey proteins are able to stimulate postprandial protein synthesis in elderly people, while other proteins like casein are not. Indeed, a nutritional supplement according to an embodiment of the invention that contained whey protein produced a 2-fold increase in whole body protein synthesis in elderly people as compared to casein as the protein source. Therefore it may help to elderly people or patients suffering or recovering from illness, surgery or trauma to conserve muscle protein, rebuild muscle protein more rapidly, and hence get their strength back faster.

Whey protein is believed to be rapidly emptied from the stomach and readily hydrolyzed and absorbed in the intestine. This may result in a shorter post-prandial period in which the patient feels satiated and therefore may result in a rapid return of appetite. On the contrary, proteins like casein, which are slowly emptied from the stomach, provoke a steady, prolonged post-prandial period in which the patient may feel satiated. Therefore the nutritional supplement may be used to provide supplemental nutrition to elderly and sick and convalescing patients who are prone to anorexia and/or protein-energy malnutrition.

It is also found that the amino acid profile is well suited for promoting endogenous production of glutamine. Therefore the nutritional supplement may be used as an indirect source of glutamine for animals or humans. In particular, the nutritional supplement may be used to provide nutrition to stressed patients having a depleted glutamine status; for example for patients who are critically ill, or who are suffering from sepsis, injury, burns, inflammation, or patients recovering from surgery. Further, the nutritional supplement may be used to promote glutamine synthesis in patients suffering from injured or diseased intestines or to maintain the physiological functions of the intestine. Moreover, the nutritional supplement may be used to maintain or raise plasma glutamine levels in humans and animals and improve immune function.

Further, it is found that the whey protein contains high levels of threonine, an important building block of mucins. Therefore the nutritional supplement has the advantage that it may be used to provide supplemental nutrition to patients suffering from, or at risk of, impaired or reduced mucin production; for example, patients undergoing an inflammatory response, suffering from malnutrition, suffering from cystic fibrosis, malignancy, chronic inflammatory bowel diseases, ulcerative colitis and Crohn's disease, undergoing treatment which includes the administration of non-steroidal anti-inflammatory drugs, and the like, and after total parenteral nutrition.

Further, it is found that the whey protein contains high levels of cysteine, an important antioxidant and immediate precursor of glutathione. Therefore the nutritional supplement has the advantage that it can be used to provide supplemental nutrition to patients suffering from glutathione depletion and low antioxidant status. For example, the nutritional supplement may be used as a nutritional support for elderly or patients undergoing or recovering from acute or chronic inflammatory states.

The amount of the nutritional supplement required to be fed to a patient will vary depending upon factors such as the patient's condition, the patient's body weight, the age of the patient, and other sources of nutrition. However the required amount may be readily set by a medical practitioner. The nutritional supplement may be taken in multiple doses, for example 2 to 5 times, to make up the required daily amount or may be taken in a single dose.

By way of example and not limitation, examples of the invention are now described for further illustration.

### Example 1

A ready-to-drink nutritional supplement is prepared. The nutritional supplement includes the following components:

| **Component** | **Wet weight (% by weight of total composition)** | **Energy (%)** |
|---|---|---|
| Protein | 4.8 | 16 |
| Whey protein | | |
| Carbohydrate | 13 | 54 |
| Maltodextrin | | |
| Sucrose | | |
| Lipids | 2.8 g | 30 |
| High oleic safflower oil | | |
| Corn oil | | |
| Canola oil | | |
| Vitamins and Minerals | At least 5% of RDA | |

The lipid mixture is made up of about 25% by weight of saturated fatty acids, about 55% by weight of monounsaturated fatty acids and about 20% by weight of polyunsaturated fatty acids. The n-6:n-3 ratio is about 7:1. The formula contains 30 IU of Vitamin E and 60 mg of Vitamin C per serving.

The energy density of the supplement is 1000 kcal/l.

### Example 2

A ready-to-drink nutritional supplement is prepared. The nutritional supplement contains 16% of calories as protein of which 70% of the protein is hydrolyzed whey and the remainder is intact protein The remaining components are described in Example 1.

The energy density of the supplement is 1000 kcal/l.

### Example 3

A ready-to-drink nutritional supplement is prepared. The nutritional supplement contains 16% of calories as protein of which 50% to 100% may be from whey or hydrolyzed whey protein.

The energy density of the supplement is 1500 kcal/l.

### Example 4

A powdered nutritional supplement is prepared. The nutritional supplement contains 16% of calories as protein of which 50% to 100% may be whey or hydrolyzed whey protein. The supplement may contain a probiotic bacteria, preferably L. johnsonii.

### Example 5 - Pediatric RTD

A ready-to-drink nutritional supplement is prepared that is tailored to the needs of growing children. For example the nutritional supplement contains a lower percentage of calories as protein preferably 10-12% of calories as protein and a higher percentage of calories as carbohydrate. The remaining components are as described in example 1.

The energy density of the supplement is 1000 kcal/l.

### Example 6 - Pediatric powder

A powdered nutritional supplement is prepared. The nutritional supplement contains 10-12% of calories as protein of which 50% to 100% may be whey or hydrolyzed whey protein. The supplement may contain probiotics preferably B. bifidus and S. thermophilus

### Example 7 - Bar and Puddings

Alternate forms of the supplement are prepared such as puddings, flans and snack bar. The pudding and flan forms are suitable for use by dysphagic subjects. All alternate forms are prepared to contain 10%-16% of calories as protein of which 50% to 100% may be whey or hydrolyzed whey.

### Experiment No. 1

The purpose of this study was to compare in healthy elderly men, the effect of a supplement containing either whey protein or casein on whole body postprandial protein metabolism and balance. For that purpose, postprandial leucine kinetics after ingestion of the casein- (CAS) or the whey-based supplement (WP) were compared.

### Materials :

L-[1-¹³C] leucine (99 mol percent excess, MPE), L-[5,5,5-²H₃] leucine (97 MPE) and sodium [¹³C] bicarbonate (99 MPE) were obtained from Eurisotop (Gif-sur-Yvette, France). Isotopic and chemical purity of leucine were checked by gas chromatography-mass spectrometry (GCMS) and were tested for sterility and pyrogenicity before use. The tracers administered intravenously (L-[1-¹³C] leucine and [¹³C] bicarbonate) were prepared in sterile pyrogen-free water. During each experiment, they were filtered through 0.22 µm membrane filters. L-[5,5,5-²H₃] leucine was employed to produce two intrinsically labeled bovine milk proteins fractions: casein and whey proteins. Labeled proteins were obtained by infusing a lactating cow with the deuterated tracer, collecting the milk and purifying the 2 protein fractions by microfiltration and ultrafiltration techniques. The leucine enrichments were 8.28 and 8.16 MPE, respectively. Labeled proteins fractions were mixed with their respective unlabelled fraction, to obtain a total concentration of around 10µmol/kg L-[5,5,5-²H₃] leucine. Protein purity and bacteriological quality met the criteria for human consumption.

### Subjects :

Nine elderly healthy male volunteers participated in this study. They were 71.8 ± 1 (mean ± SE) years old and had a normal body weight (body mass index : 25.3 ± 1.0 kg/m²). Subjects had normal blood biochemical profile, urea analysis and physical examination, without any medical history of renal, cardiovascular, gastrointestinal or endocrine disease. They were asked to maintain during the study their usual physical activity.

### Experimental design :

The study consisted of two protocols differing only on the protein composition of the liquid supplements: i) supplement containing 30g of casein (CAS); and ii) supplement containing 30g of whey protein. The compositions of the complete liquid supplements are shown in Table 1 below.

All the volunteers participated in the two protocols in a random order. Between each protocol, a wash-out period of at least 3 weeks was observed. During the 4 days preceding the protocols, volunteers were instructed to adopt a balanced diet, providing ≈ 30 kcal.kg⁻¹.d⁻¹ energy, from which 16% was in form of protein.. The evening preceding the protocol, they consumed a standardized meal (849 kcal and 16% proteins). Thereafter no other food was allowed. In the morning, at around 7:30 a.m., a catheter was retrogradly inserted into a dorsal vein of the hand and used for arterial blood sampling after introduction of the hand into a 60°C heated ventilated box. A second catheter was inserted into a vein of the contralateral arm for tracer infusion. After a priming dose of [¹³C] bicarbonate (6 mg), a primed (4.2 µmol.kg⁻¹) continuous (0.06 µmol.kg⁻¹.min⁻¹) infusion of L-[1-¹³C] leucine began and was continued for 590 min. After 170 minutes of infusion (0 min), one of the supplements was ingested within 5 min.

Blood and breath samples were collected before any infusion (180, 170 min), before consumption of the supplement when the i.v. tracer had reached the isotopic plateau (-40, -20, 0 min), and after supplement ingestion at 20 min intervals (20, 40, 60, 80, 100, 120 min), at 30 min intervals (150, 180, 210, 240, 270, 300 min) and at 40 min intervals (340, 380, 420 min). After blood spinning, plasma samples were mixed with an internal standard (Norleucine) and stored at -20°C until further analysis-. Breath samples were collected in 10 ml Vacutainers (Becton Dickinson, Grenoble, France) for [¹³C] CO₂ enrichment analysis. Total carbon dioxide production rates were measured by open circuit indirect calorimetry for sequences of 20 minutes regularly repeated

### Analytical methods :

Plasma [¹³C] leucine and ketoisocaproate (KIC), and [²H₃] leucine enrichments were measured by GCMS (Hewlett-Packard 5971A) using tertiary-butyldimethylsilyl derivatives. Corrections for the [¹³C] and [²H₃] enrichments were made. Leucine concentrations were measured by GCMS using norleucine as internal standard. [¹³C] CO₂ enrichments were measured on a gas chromatography isotope ratio mass spectrometer (µGas system, Fisons Instruments, VG Isotech, Middlewich, England).

Supplements were analyzed for leucine content and enrichment by GCMS, using norleucine as internal standard. Nitrogen content was assessed by Kjeldahl analysis.

### Calculations :

The parameters of protein metabolism in non-steady state conditions (i.e. after supplement ingestion) were estimated by a precursor pool model.

The rate of total leucine appearance into the peripheral circulation (Total Leu Ra) was calculated from the intravenous tracer (i.e. [¹³C] leucine) infusion rate corrected for its time-dependent appearance into the plasma, from the leucinemia, and from the plasma leucine enrichment of the i.v. tracer. Three different leucine fluxes constitute Total Leu Ra: i) the entry rate of exogenous (i.e. dietary) leucine (Exo Leu Ra), ii) the intravenously infused labeled leucine, and iii) the entry rate of endogenous leucine derived from protein breakdown (Endo Leu Ra). In postabsorptive conditions, Exo Leu Ra is zero, thus Endo Leu Ra equals Total Leu Ra corrected by the tracer infusion rate. After supplement ingestion, Exo Leu Ra was calculated from the simultaneous variation of the ingested tracer enrichment and of Total Leu Ra, according to Proietto's transposition of Steele's equations. In that situation, Endo Leu Ra was obtained by subtracting Exo Leu Ra and the tracer infusion rate from Total Leu Ra. Splanchnic extraction, which represents the fraction of ingested leucine taken up by the gut or liver during its first pass, was calculated as the difference between total leucine intakes minus the integrated area under the curve (AUC) of Exo Leu Ra rapported to total leucine intakes.

The total leucine rate of disappearance from plasma (Total Leu Rd) was calculated as Total Leu Ra minus the time-dependent changes in leucine pool size. Total Leu Rd corresponds to the sum of the fluxes of leucine oxidized (Leu Ox) and utilized for protein synthesis (non oxidative leucine disposal or NOLD). Leu Ox was obtained by dividing the [¹³C] CO₂ production rate by the [¹³C] KIC enrichment in plasma. NOLD was therefore Total Leu Rd minus Leu Ox.

Postprandial leucine balance was calculated over a 420 min period by subtracting the AUC of Leu Ox from the leucine intake (leucine ingested + leucine infused).

In all the calculations, the constants for leucine distribution volume (0.5 L/kg), correction factor of the pool size for instant mixing (0.25), and CO₂ recovery factor (0.8) were the same as those previously employed.

### Statistical analysis :

Results were expressed as means ± SD. Statistical analysis were performed in order to i) characterize leucine kinetics modifications after supplement ingestion (i.e. changes from the postabsorptive state), and to ii) compare the 2 protocols. For that purpose, individual curves were standardized by subtracting the mean of the baseline values (time-points -40 to 0) from each individual time-point.

*Changes induced by supplement ingestion :* To assess the modifications in leucine kinetics induced by supplement ingestion, a confidence interval was calculated from each test meal using the standardized baseline values as follows : 0 ± Tα × SD. In that equation, SD is the standard deviation of the n baseline individual values within each protocol; and Tα is the critical value of the Student distribution for (n-1) degrees of freedom. The changes were declared significantly different (α=0.05), from baseline when all the individual values fell outside this interval.

*Comparison of the 2 protocols :* each individual curve was characterized by its maximum. Leucine fluxes and postprandial leucine balance were compared with repeated measures ANOVA (Statview, 4.02, Abacus Concept, Berkeley, CA) on the raw and standardized values.

### RESULTS

### Protein synthesis :

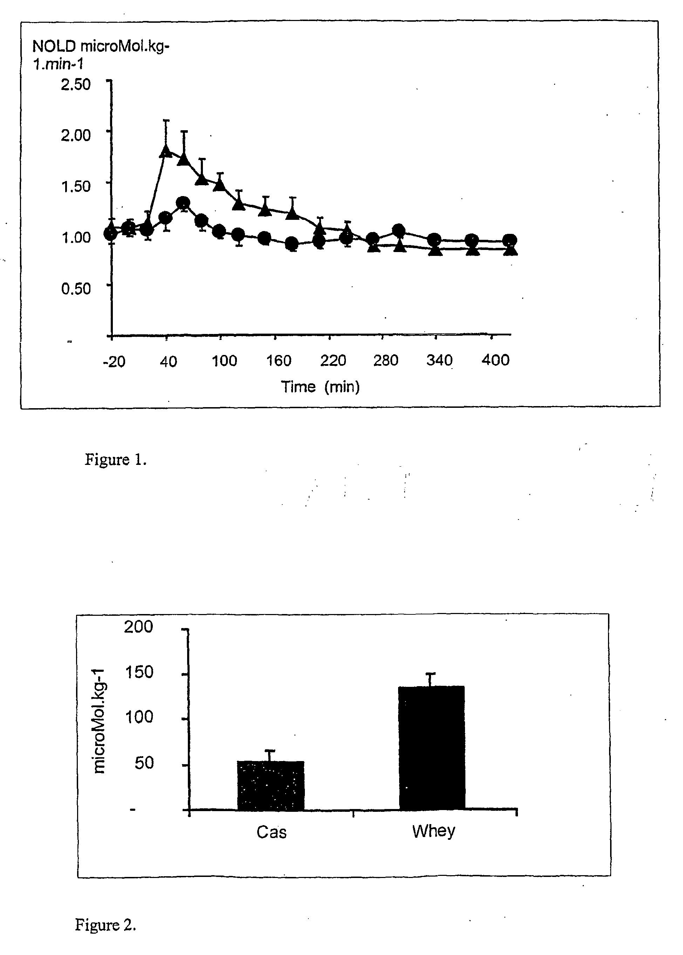

After the supplement containing casein (CAS), only a slight increase of non oxidative leucine disposal (NOLD), an index of whole body protein synthesis, was detected. In contrast, ingestion of the supplement containing whey protein (WP) induced a marked increase of NOLD during the period from 40 to 160 min (see Fig. 1), which was significantly higher than that of CAS (*P*<0.01).

### Balances:

After ingestion of the supplement containing whey protein (WP), postprandial leucine balance (an index of protein balance) over 7 h was 135 ± 18 µmol.kg⁻¹ (see Figure 2), nearly 3-fold higher than after ingestion of the supplement containing casein (54 ± 14 µmol.kg⁻¹). This difference is highly significant (*P*<0,001). See Figure 2.

**Table 1. Formula of the casein- and whey-based supplements (g/100 g liquid product)**

| *Ingredients* | *CAS* | *WP* |
|---|---|---|
| Carbohydrate | 12.50 | 12.50 |
| Casein | 7.50 | |
| Whey protein isolate | | 7.50 |
| Fat | 2.00 | 2.00 |
| Vitamin and mineral mix | 0.32 | 0.32 |
| Flavor | 0.10 | 0.10 |
| Water | 77.36 | 77.36 |

## Claims

1. Use of a composition comprising,
a protein source, which provides at least 8 % of the total calories of the composition and which includes at least 50 % by weight, of the protein source, whey protein,
a lipid source having an omega 3 to 6 fatty acid ratio of approximately 5:1 to about 10:1 and which provides at least 18 % of the total calories of the composition,
a carbohydrate source and a macro-nutrient profile comprising at least vitamin E and C
for the preparation of an ingestable carrier for improving muscle protein synthesis, preventing muscle loss, or accelerating muscle mass recovery.

2. The use according to claim 1, wherein the whey protein includes a partially hydrolyzed whey protein.

3. The use according to claim 1 or claim 2, wherein the whey protein includes a whey protein hydrolyzate that comprises at least 50 % of the protein source in the composition.

4. The use according to any of the preceding claims, wherein at least 50 % by weight of the whey protein is hydrolyzed.

5. The use according to any of the preceding claims, wherein the composition includes caseino-glycomacropeptide.

6. The use according to any of the preceding claims, wherein the protein source provides up to 20 % of the total energy of the composition.

7. The use according to any of the preceding claims, wherein the lipid source comprises 40 % to 65 % by weight of mono-unsaturated fatty acids and 15 % to 30 % by weight of poly-unsaturated fatty acids.

8. The use according to any of the preceding claims, wherein the saturated fatty acids content is less than 30 % by weight.

9. The use according to any of the preceding claims, wherein the lipid source provides 25 % to about 35 % of the total energy of the composition.

10. The use according to any of the preceding claims, wherein the carbohydrate source comprises sucrose, corn syrup, maltodextrin and/or a combination thereof.

11. The use according to any of the preceding claims, wherein the carbohydrate source provides 50 % to 60 % of the total energy of the composition.

12. The use according to any of the preceding claims, wherein the composition includes one or more micro-nutrients selected from the group consisting of vitamin E, vitamin C, taurine, folic acid and vitamin B-12.

13. The use according to any of the preceding claims, wherein the composition comprises at least one prebiotic fiber selected from the group consisting of inulin, acacia gum, resistant starch, dextran, xylo-oligosaccharides, fructo-oligosaccharides (FOS) and/or combinations thereof.

14. The use according to any of the preceding claims, wherein the composition includes probiotic bacteria.

## Patentansprüche

1. Verwendung einer Zusammensetzung mit
einer Proteinquelle, die wenigstens 8 % der Gesamtkalorien der Zusammensetzung bereitstellt und die wenigstens 50 Gew.-% der Proteinquelle Molkenprotein beinhaltet,
einer Lipidquelle mit einem Verhältnis von Omega-3-zu -6-Fettsäuren von etwa 5:1 bis etwa 10:1 und die wenigstens 18 % der Gesamtkalorien der Zusammensetzung bereitstellt,
einer Kohlenhydratquelle und einem Mikronährstoff-Profil, das wenigstens Vitamin E und C umfasst zur Herstellung eines zum Verzehr geeigneten Trägers zur Verbesserung der Muskelproteinsynthese, der Verhinderung von Muskelschwund oder zur Beschleunigung der Wiederherstellung der Muskelmasse.

2. Verwendung nach Anspruch 1, wobei das Molkenprotein ein teilweise hydrolysiertes Molkenprotein einschließt.

3. Verwendung nach Anspruch 1 oder Anspruch 2, wobei das Molkenprotein ein Molkenproteinhydrolysat einschließt, das wenigstens 50 % der Proteinquelle in der Zusammensetzung bildet.

4. Verwendung nach irgendeinem der vorausgehenden Ansprüche, wobei wenigstens 50 Gew.-% des Molkenproteins hydrolysiert sind.

5. Verwendung nach irgendeinem der vorausgehenden Ansprüche, wobei die Zusammensetzung Caseino-Glykomakropeptid beinhaltet.

6. Verwendung nach irgendeinem der vorausgehenden Ansprüche, wobei die Proteinquelle bis zu 20 % der Gesamtenergie der Zusammensetzung bereitstellt.

7. Verwendung nach irgendeinem der vorausgehenden Ansprüche, wobei die Lipidquelle von 40 bis 65 Gew.-% einfach ungesättigte Fettsäuren und von 15 bis 30 Gew.-% mehrfach ungesättigte Fettsäuren umfasst.

8. Verwendung nach irgendeinem der vorausgehenden Ansprüche, wobei der Gehalt an gesättigten Fettsäuren weniger als 30 Gew.-% beträgt.

9. Verwendung nach irgendeinem der vorausgehenden Ansprüche, wobei die Lipidquelle 25 bis etwa 35 % der Gesamtenergie der Zusammensetzung bereitstellt.

10. Verwendung nach irgendeinem der vorausgehenden Ansprüche, wobei die Kohlenhydratquelle Saccharose, Maissirup, Maltodextrin und/oder eine Kombination davon umfasst.

11. Verwendung nach irgendeinem der vorausgehenden Ansprüche, wobei die Kohlenhydratquelle 50 bis 60 % der Gesamtenergie der Zusammensetzung bereitstellt.

12. Verwendung nach irgendeinem der vorausgehenden Ansprüche, wobei die Zusammensetzung einen oder mehrere Mikronährstoffe beinhaltet, die aus der Gruppe ausgewählt sind, die besteht aus Vitamin E, Vitamin C, Taurin, Folsäure und Vitamin B₁₂.

13. Verwendung nach irgendeinem der vorausgehenden Ansprüche, wobei die Zusammensetzung wenigstens einen präbiotischen Ballaststoff beinhaltet, der aus der Gruppe ausgewählt ist, die besteht aus Inulin, Akaziengummi, resistenter Stärke, Dextran, Xylo-Oligosacchariden, Fructo-Oligosacchariden (FOS) und/oder Kombinationen davon.

14. Verwendung nach irgendeinem der vorausgehenden Ansprüche, wobei die Zusammensetzung probiotische Bakterien beinhaltet.

## Revendications

1. Utilisation d'une composition comprenant,
une source de protéine qui fournit au moins 8 % des calories totales de la composition et qui comprend au moins 50 % en poids, par rapport à la source de protéine, de protéine de lactosérum,
une source de lipide ayant un rapport d'acides gras oméga-3 à oméga-6 d'environ 5:1 à environ 10:1 et qui fournit au moins 18 % des calories totales de la composition,
une source de glucide et un profil de macronutriments comprenant au moins les vitamines E et C,
pour la préparation d'un support ingestible destiné à améliorer la synthèse des protéines musculaires, prévenir la fonte musculaire ou accélérer la récupération de masse musculaire.

2. Utilisation selon la revendication 1, dans laquelle la protéine de lactosérum comprend une protéine de lactosérum partiellement hydrolysée.

3. Utilisation selon la revendication 1 ou la revendication 2, dans laquelle la protéine de lactosérum comprend un hydrolysat de protéine de lactosérum qui constitue au moins 50 % de la source de protéine de la composition.

4. Utilisation selon l'une quelconque des revendications précédentes, dans laquelle au moins 50 % en poids de la protéine de lactosérum sont hydrolysés.

5. Utilisation selon l'une quelconque des revendications précédentes, dans laquelle la composition comprend un caséinoglycomacropeptide.

6. Utilisation selon l'une quelconque des revendications précédentes, dans laquelle la source de protéine fournit jusqu'à 20 % de l'énergie totale de la composition.

7. Utilisation selon l'une quelconque des revendications précédentes, dans laquelle la source de lipide comprend 40 % à 65 % en poids d'acides gras mono-insaturés et 15 % à 30 % en poids d'acides gras polyinsaturés.

8. Utilisation selon l'une quelconque des revendications précédentes, dans laquelle la teneur en acides gras saturés est inférieure à 30 % en poids.

9. Utilisation selon l'une quelconque des revendications précédentes, dans laquelle la source de lipide fournit 25 % à environ 35 % de l'énergie totale de la composition.

10. Utilisation selon l'une quelconque des revendications précédentes, dans laquelle la source de glucide comprend du saccharose, du sirop de glucose, de la maltodextrine et/ou une association d'entre eux.

11. Utilisation selon l'une quelconque des revendications précédentes, dans laquelle la source de glucide fournit 50 % à 60 % de l'énergie totale de la composition.

12. Utilisation selon l'une quelconque des revendications précédentes, dans laquelle la composition comprend un ou plusieurs micronutriments choisis dans le groupe formé par la vitamine E, la vitamine C, la taurine, l'acide folique et la vitamine B-12.

13. Utilisation selon l'une quelconque des revendications précédentes, dans laquelle la composition comprend au moins une fibre prébiotique choisie dans le groupe formé par l'inuline, la gomme arabique, l'amidon résistant, le dextrane, les xylo-oligosaccharides, les fructo-oligosaccharides (FOS) et/ou leurs associations.

14. Utilisation selon l'une quelconque des revendications précédentes, dans laquelle la composition comprend des bactéries probiotiques.
